# EUROPEAN PATENT APPLICATION

(11) **EP 3 616 513 A1**
(43) Date of publication of application: **04.03.2020**
(21) Application number: 18790607.8
(22) Date of filing: 26.04.2018
(51) Int. Cl.: A01N 25/04, A01N 37/52, A01N 43/653, A01N 47/34, A01P 3/00

(54) **SUSPOEMULSION**

(30) Priority: 28.04.2017 JP 2017089265
(71) Applicant: Nippon Soda Co., Ltd., Tokyo 100-8165 (JP)
(72) Inventor: ITO Akihiko, Joetsu-shi Niigata 949-2392 (JP)
(74) Representative: Wibbelmann, Jobst
(86) International application number: PCT/JP2018/016903
(87) International publication number: WO 2018/199202

(57) **Abstract**

A suspoemulsion containing thiphanate methyl, tebuconazole, cyflufenamid, a fatty acid ester-based solvent, and water has excellent dispersibility, flowability, and storage stabiliy.

## Description

### TECHNICAL FIELD

The present invention relates to a suspoemulsion. Further particularly, the present invention relates to a suspoemulsion containing, as agrochemical active ingredients, thiophanate-methyl, tebuconazole and cyflufenamid, the suspoemulsion having excellent dispersibility, flowability and storage stabiliy.

The present invention claims priority on the basis of Japanese Patent Application No. 2017-089265 filed in Japan on April 28, 2017, the contents of which are incorporated herein by reference.

### BACKGROUND OF THE INVENTION

A suspoemulsion (SE) is known as one of agrochemical dosage forms. The suspoemulsion is a formulation in which a suspension (SC) and an emulsion (EW) are mixed and water is contained as a solvent, the formulation being obtained by dispersing both a water-insoluble solid raw material and a water-insoluble liquid raw material (oily raw material) in one solvent (water).

For example, Patent Document 1 discloses a suspoemulsion containing: a poorly water-soluble liquid agrochemical component; a poorly water-soluble agrochemical active ingredient which is solid at ordinary temperature; a polyoxyalkylene block copolymer; a phosphate ester salt or a sulfate ester salt of polyoxyethylene arylphenyl ether; a lignin sulfonate; and water.

Patent Document 2 discloses an aqueous suspoemulsion containing: dithiocarbamate as a suspended solid; and triazole, morpholine or pyrimidine as an emulsified component, and further containing a polymer of propylene oxide and ethylene oxide, the polymer having at least 40% by mol of polyoxyethylene units, and a polyoxypropylene part at the central portion thereof, and being represented by formula:

HO(CH₂CH₂O)ₓ(CH(CH₃)CH₂O)_{y}(CH₂CH₂O)_{z}H

(in the formula, x, y and z each represent numbers that make the molecular weight of each portions be at least 1200).

Patent Document 3 discloses an agricultural and horticultural agrochemical composition in a suspoemulsion form, characterized by containing: a poorly water-soluble agrochemical raw material having an aqueous-solubility at 25°Cof 100 ppm or less and a melting point of 68°C or less; at least one poorly water-soluble solvent having an aqueous-solubility at 25°C of 100 ppm or less and selected from the group consisting of fatty acid ester-based solvents, dibasic ester-based solvents and higher alcohol-based solvents; a poorly water-soluble agrochemical raw material having an aqueous-solubility at 25°Cof 100 ppm or less and a melting point of 69°Cor more; a protective colloid agent; an aromatic vinyl-based resin; and water.

Patent Document 4 discloses an agricultural and horticultural agrochemical composition in a suspoemulsion form, containing: a poorly water-soluble agrochemical raw material having an aqueous-solubility at 25°Cof 100 ppm or less; a poorly water-soluble hydrocarbon-based solvent having an aqueous-solubility at 25°C of 100 ppm or less; a poorly water- and oil-soluble agrochemical raw material having both an aqueous-solubility and an oil-solubility at 25°Cof 100 ppm or less; a surfactant; an aromatic vinyl-based resin; and water.

### DOCUMENTS OF RELATED ART

### Patent Documents

Patent Document 1: WO 2013/129690A
Patent Document 2: Japanese Unexamined Patent Application, First Publication No. Hei 8-67603
Patent Document 3: Japanese Unexamined Patent Application, First Publication No. 2002-293701
Patent Document 4: Japanese Unexamined Patent Application, First Publication No. 2000-344604

### SUMMARY OF THE INVENTION

### PROBLEMS TO BE SOLVED BY THE INVENTION

Since the aqueous solubilities of thiophanate-methyl, tebuconazole and cyflufenamid are different mutually, it is difficult to stably emulsify or disperse them together in water, even if the kind or the amount of a surfactant is controlled. In addition, even if Solvesso-200, which is known as a good solvent, is used, the solidification is confirmed and the flowability was lost over time.

The present invention aims to provide a suspoemulsion containing thiophanate-methyl, tebuconazole and cyflufenamid as agrochemical active ingredients, and having excellent dispersibility, flowability and storage stabiliy.

### MEANS TO SOLVE THE PROBLEMS

The present invention includes the following aspects.
(1) A suspoemulsion containing a thiophanate-methyl, a tebuconazole, a cyflufenamid, a fatty acid ester-based solvent and water.
(2) The suspoemulsion according to (1), wherein the carbon number of a fatty acid of the fatty acid ester-based solvent is 8 to 24.
(3) The suspoemulsion according to (1) or (2), wherein the fatty acid of the fatty acid ester-based solvent is at least one selected from the group consisting of a caprylic acid, a capric acid, a lauric acid, a myristic acid, a palmitic acid, a palmitoleic acid, a stearic acid, an oleic acid, a linoleic acid, a linolenic acid and an arachidic acid.
(4) The suspoemulsion according to any one of (1) to (3) further containing a surfactant.
(5) The suspoemulsion according to (4), comprising, as the surfactant, a polyoxyethylene alkylether, a polyoxyalkylene block copolymer, and an aromatic sulfonate formalin condensate or a salt thereof.

### EFFECTS OF THE INVENTION

In the suspoemulsion according to the present invention, thiophanate-methyl, tebuconazole and cyflufenamid are appropriately dispersed, and the flowability and the storage stability thereof are excellent.

### EMBODIMENTS FOR CARRYING OUT THE INVENTION

A suspoemulsion according to the present invention contains thiophanate-methyl, tebuconazole, cyflufenamid, fatty acid ester-based solvent and water.

### (Thiophanate-methyl)

Thiophanate-methyl (IUPAC: methyl N-[[2-(methoxycarbonylthiocarbamoylamino)phenyl]thiocarbamoyl]carbamate) is one of benzimidazole-based fungicidal active ingredients. The thiophanate-methyl used to prepare the suspoemulsion according to the present invention is preferably powder. In the suspoemulsion according to the present invention, the thiophanate-methyl is dispersed as microparticle in water. The 50% particle diameter thereof based on volume is preferably 0.1 µm to 100 µm, more preferably 0.5 µm to 10 µm, and even more preferably 0.5 µm to 3 µm.

### (Tebuconazole)

Tebuconazole (IUPAC: (RS)-1-p-chlorophenyl-4,4-dimethyl-3-(1H-1,2,4-triazol-1-ylmethyl)pentane-3-ol) is one of sterol biosynthesis inhibitors (fungicides) having a triazole skeleton. The tebuconazole used to prepare the suspoemulsion according to the present invention is preferably powder. In the suspoemulsion according to the present invention, the tebuconazole is dispersed as microparticle in water. The 50% particle diameter thereof based on volume is preferably 0.1 µm to 100 µm, more preferably 0.5 µm to 10 µm, and even more preferably 0.5 µm to 3 µm.

The total mass of the thiophanate-methyl and the tebuconazole contained in the suspoemulsion according to the present invention, relative to the mass of the suspoemulsion, is preferably 10% by mass to 60% by mass, and more preferably 20% by mass to 50% by mass.

The molar ratio of thiophanate-methyl/tebuconazole contained in the suspoemulsion according to the present invention is preferably 2/1 to 5/1, more preferably 3/1 to 5/1, and even more preferably 3/1 to 4/1.

### (Cyflufenamid)

Cyflufenamid (IUPAC: (Z)-N-[α-(cyclopropylmethoxyimino)-2,3-difluoro-6-(trifluoromethyl)benzyl]-2-phenyl acetamide) is a fungicide having an amidoxime skeleton. The cyflufenamid used to prepare the suspoemulsion according to the present invention is preferably powder. However, in the suspoemulsion according to the present invention, the cyflufenamid is dispersed in water as a solution in which the cyflufenamid is dissolved in a fatty acid ester-based solvent. The cyflufenamid is commercially available under the trademark of PANCHO.

The amount of the cyflufenamid contained in the suspoemulsion according to the present invention, relative to the mass of the suspoemulsion, is preferably 0.1% by mass to 0.9% by mass, more preferably 0.3% by mass to 0.9% by mass, and even more preferably 0.5% by mass to 0.9% by mass.

### (Fatty acid ester-based solvent)

The fatty acid ester-based solvent is a solvent composed of a compound in which a hydroxy group of an alcohol is ester-bonded with a fatty acid.

The carbon number of the fatty acid of the fatty acid ester-based solvent is preferably 8 to 24. The fatty acid of the fatty acid ester-based solvent is preferably at least one selected from the group consisting of caprylic acid, capric acid, lauric acid, myristic acid, palmitic acid, palmitoleic acid, stearic acid, oleic acid, linoleic acid, linolenic acid and arachidic acid. Examples of the alcohol in a fatty acid alkyl include: C1-18 linear or branched monoalcohols such as methyl alcohol, butyl alcohol, isobutyl alcohol, and oleyl alcohol; and C2-10 glycols such as ethylene glycol, propylene glycol, polyethylene glycol, neopenthyl glycol, and glycerol. Among these fatty acid ester-based solvents, an acylglycerol is preferably used.

The acylglycerol is a compound in which at least one of three hydroxy groups in a glycerol is ester-bonded with a fatty acid. Examples of the acylglycerol include monoacylglycerol (another name: monoglyceride), diacylglycerol (another name: diglyceride), and triacylglycerol (another name: triglyceride). In the present invention, triglyceride is preferable. Examples of the triglyceride include oleic acid triglyceride, linoleic acid triglyceride, linolenic acid triglyceride, and erucic acid triglyceride.

The acylglycerol is contained in a plant oil such as linseed oil, safflower oil, sunflower oil, soybean oil, corn oil, arachis oil, cotton oil, sesame oil, rice oil, rapeseed oil, olive oil, palm oil, palm kernel oil, palm oil, or castor oil, and therefore such a plant oil may be used instead of the acylglycerol to prepare the suspoemulsion according to the present invention. Among these, a rapeseed oil is preferable.

The amount of the fatty acid ester-based solvent (preferably, rapeseed oil) contained in the suspoemulsion according to the present invention, relative to the mass of the suspoemulsion, is preferably 1% by mass to 20% by mass, more preferably 5% by mass to 15% by mass, and even more preferably 10% by mass to 15% by mass.

The mass ratio of the fatty acid ester-based solvent (preferably rapeseed oil) and cyflufenamid (fatty acid ester-based solvent: cyflufenamid) contained in the suspoemulsion according to the present invention is preferably 98:2 to 92:8, and more preferably 97:3 to 94:6.

### (Water)

Water used in the present invention is not limited by the hardness thereof, and any of soft water and hard water may be used. For example, distilled water, industrial water or the like may be used.

The amount of water contained in the suspoemulsion according to the present invention, relative to the mass of the suspoemulsion, is preferably 20% by mass to 40% by mass, more preferably 25% by mass to 35% by mass, and even more preferably 30% by mass to 35% by mass.

### (Surfactant)

The suspoemulsion according to the present invention may further contain a surfactant, as needed. The surfactant available in the present invention is not particularly limited. Examples of the surfactant include: nonionic surfactants such as polyoxyethylene, polyoxyethylene alkylphenyl ether, polyoxyethylene alkylether, polyoxyethylene higher fatty acid ester, polyoxyethylene sorbitan higher fatty acid ester, polyoxyethylene tristyrylphenyl ether, and polyoxyalkylene block copolymer; polyoxyethylene alkylphenyl ether sulfate, alkylbenzen sulfonate, higher alcohol sulfate, alkylnaphthalene sulfonate, polycarboxylate, lignin sulfonate, formalin condensate of aromatic sulfonic acid such as alkylnaphthalene sulfonic acid or phenolsulfonic acid, and salts thereof, and isobutylene-maleic anhydride copolymer. Among these, at least one selected from the group consisting of polyoxyethylene alkylether (preferably poly(oxyethylene)=3,5-dimethyl-1-(2-methylpropyl)hexyl=ether), polyoxyalkylene block copolymer (preferably ethylene oxide - propylene oxide block copolymer), aromatic sulfonate formalin condensate (preferably phenolsulfonate formalin condensate) and salts thereof (preferably sodium salts) is preferable. More preferably, the suspoemulsion according to the present invention contains polyoxyethylene alkylether, polyoxyalkylene block copolymer, and aromatic sulfonate formalin condensate or a salt thereof.

The amount of the surfactant in the suspoemulsion according to the present invention, relative to the mass of the suspoemulsion, is preferably 0.1% by mass to 10% by mass, more preferably 1% by mass to 10% by mass, and even more preferably 1% by mass to 5% by mass.

The mass ratio of the surfactant and the cyflufenamid in the suspoemulsion according to the present invention is preferably 5:1 to 10:1, and more preferably 5:1 to 7:1.

The mass ratio of the polyoxyethylene alkylether and the polyoxyalkylene block copolymer (polyoxyethylene alkylether : polyoxyalkylene block copolymer) in the suspoemulsion according to the present invention is preferably 1:2 to 2:1, and more preferably 1:1.

The mass ratio of the polyoxyethylene alkylether and the aromatic sulfonate formalin condensate (polyoxyethylene alkylether : aromatic sulfonate formalin condensate) in the suspoemulsion according to the present invention is preferably 1:1 to 3:1, and more preferably 2:1.

The mass ratio of the polyoxyalkylene block copolymer and the aromatic sulfonate formalin condensate (polyoxyalkylene block copolymer : aromatic sulfonate formalin condensate) in the suspoemulsion according to the present invention is preferably 1:1 to 3:1, and more preferably 2:1.

### (Other components)

The suspoemulsion according to the present invention may contain other components such as an antifoaming agent, a preservative agent, a thickener, an antifreezing agent, or an anticaking agent, as needed. The amount of the other components which may be contained in the suspoemulsion according to the present invention, relative to the mass of the suspoemulsion, is preferably 0% by mass to 15% by mass, and more preferably 5% by mass to 13% by mass.

### (Other component: antifoaming agent)

Examples of the antifoaming agent include silicone-based antifoaming agents and organic antifoaming agents. Among these, silicone-based antifoaming agents are preferable. As the silicone-based antifoaming agents, various forms such as oil-types, oil compound-types, solution-types, emulsion-types, or selfemulsifying-types may be used.

The amount of the antifoaming agent which may be contained in the suspoemulsion according to the present invention, relative to the mass of the suspoemulsion, is preferably 0% by mass to 2% by mass, more preferably 0.01% by mass to 1% by mass, and even more preferably 0.1% by mass to 0.5% by mass.

### (Other component: preservative agent)

Examples of the preservative agent include ones containing isothiazolone such as methylisothiazolinone (MIT, MI), chloromethylisothiazolinone (CMIT, CMI), octylisothiazolinone (OIT, OI), dichloro octylisothiazolinone (DCOIT, DCOI), and benzisothiazolinone (BIT). Examples of commercially available products containing isothiazolone include PROXEL (trademark), ACTICIDE (trademark), and KATHON (trademark).

The amount of the preservative agent which may be contained in the suspoemulsion according to the present invention, relative to the mass of the suspoemulsion, is preferably 0% by mass to 1% by mass, and more preferably 0.05% by mass to 0.5% by mass.

### (Other component: thickener or anticaking agent)

Examples of the thickener or the anticaking agent include white carbon, gum arabic, tragacanth gum, xanthan gum, guar gum, locust bean gum, casein, alginic acid, cellulose-based polysaccharide, ethyl cellulose, polyvinyl alcohol, carboxymethyl cellulose, hydroxyethyl cellulose, hydroxypropyl cellulose, carboxymethyl cellulose, aluminosilicate, bentonite, montmorillonite, hectorite, and attapulgite. Among these, xanthan gum and white carbon are preferable.

The amount of the thickener or the anticaking agent which may be contained in the suspoemulsion according to the present invention, relative to the mass of the suspoemulsion, is preferably 0% by mass to 10% by mass, and more preferably 0.1% by mass to 5% by mass.

### (Other component: an antifreezing agent)

Examples of the antifreezing agent include liquid polyols such as ethylene glycol, propylene glycol, and glycerol. The amount of the antifreezing agent which may be contained in the suspoemulsion according to the present invention, relative to the mass of the suspoemulsion, is preferably 0% by mass to 20% by mass, more preferably 1% by mass to 20% by mass, and even more preferably 5% by mass to 10% by mass.

### (Preferable range)

Although the ratio of each component in the suspoemulsion according to the present invention is not particularly limited, it is preferable that the ratio of thiophanate-methyl be 10% by mass to 40% by mass, that of tebuconazole be 1% by mass to 20% by mass, that of cyflufenamid be 0.1% by mass to 0.9% by mass, that of a fatty acid ester-based solvent be 1% by mass to 20% by mass, and that of water be 20% by mass to 40% by mass.

In addition, the suspoemulsion may contain 0.1% by mass to 10% by mass of a surfactant, 0% by mass to 2% by mass of an antifoaming agent, 0% by mass to 1% by mass of a preservative agent, 0% by mass to 10% by mass of a thickener or an anticaking agent, 0% by mass to 20% by mass of an antifreezing agent, and the like.

More preferably, the total mass of thiophanate-methyl and tebuconazole is 20% by mass to 60% by mass, the mass of cyflufenamid is 0.3% by mass to 0.9% by mass, that of the fatty acid ester-based solvent is 5% by mass to 15% by mass, that of water is 25% by mass to 35% by mass, that of the surfactant is 1% by mass to 10% by mass, that of the antifoaming agent is 0.01% by mass to 1% by mass, that of the preservative agent is 0.05% by mass to 0.5% by mass, that of the thickener or the anticaking agent is 0.1% by mass to 5% by mass, and that of the antifreezing agent is 1% by mass to 20% by mass.

Even more preferably, the total mass of thiophanate-methyl and tebuconazole is 30% by mass to 50% by mass (the molar ratio of thiophanate-methyl/tebuconazole is preferably 2/1 to 5/1), the mass of cyflufenamid is 0.5% by mass to 0.9% by mass, that of the fatty acid ester-based solvent is 10% by mass to 15% by mass, that of water is 30% by mass to 35% by mass, that of the surfactant is 1% by mass to 5% by mass, that of the antifoaming agent is 0.1% by mass to 0.5% by mass, that of the preservative agent is 0.05% by mass to 0.5% by mass, that of the thickener or the anticaking agent is 0.1% by mass to 5% by mass, and that of the antifreezing agent is 5% by mass to 10% by mass.

### (Preparation method)

The suspoemulsion according to the present invention is not particularly limited by the preparation method thereof. Examples of the preparation method of the suspoemulsion according to the present inventin include a preparation method in which a mixture liquid composed of an suspension and an emulsion is stirred at a high shear velocity to conduct suspending and emulsification simultaneously, a method in which a suspension and an emulsion are prepared separately, and then mixing the suspension and the emulsion appropriately, a method in which an emulsion is prepared in advance, and then solid agrochemical raw materials are added to the emulsion to disperse the solid agrochemical raw materials therein, and a method in which a suspension is prepared in advance, and then a liquid composed of oily agrochemical raw materials is added to the suspension to conduct emulsification.

Further specifically, water, a polyoxyalkylene block copolymer, and an aromatic sulfonate formalin condensate or a salt thereof, and, as needed, an antifoaming agent, a preservative agent and an anticaking agent are added and mixed, followed by adding thiophanate-methyl and tebuconazole thereto to conduct wet-milling.

Then, an antifreezing agent, a thickener, and a preservative agent are added to the resultant wet-milled product, as needed, and then a fatty acid ester-based solvent, a polyoxyethylene alkylether, and cyflufenamid are added thereto, followed by stirring the mixture using a homogenizer to prepare a suspoemulsion.

### (Use)

The suspoemulsion according to the present invention is usually diluted with water to be used. The diluted aqueous solution of the suspoemulsion may be applied to plants, soil, or the like, by dispersal, coating, spraying, or other methods.

The suspoemulsion according to the present invention may be used as a fungicide.

### EXAMPLES

Next, the present invention will be explained more specifically by showing examples. The present invention is not limited to the examples.

In the examples, the below-mentioned substances were used.
Surfactant (A): Pluronic PE10500 (trade name), ethylene oxide-propylene oxide block copolymer (manufactured by BASF Corporation)
   Surfactant (B): Tamol DN (trade name), sodium phenolsulfonate formaldehyde condensate (BASF Corporation)
   Surfactant(C): Tergitol 15-S-7 (trade name), polyglycolether (nonionic) surfactant (manufactured by Dow)
   Antifoaming agent: Silfoam SE-39 (trade name) (manufactured by Wacker)
   Preservative agent: Proxel GXL (trade name) (manufactured by Arch UK Biocides Ltd.)
   Anticaking agent: Sipernat 22 (trade name) (manufactured by EVONIK Industries)
   Solvent (A): rapeseed oil, main component: oleic acid triglyceride, linoleic acid triglyceride
   Solvent (B): Solvesso-200 (trade name) (manufactured by ExxonMobil Chemical Company) (aromatic solvent)
   Solvent (C): cyclohexanone

### (Example 1)

31 parts by mass of water, 2 parts by mass of surfactant (A), 1 parts by mass of surfactant (B), 0.5 parts by mass of an antifoaming agent, 0.1 parts by mass of a preservative agent, and 0.4 parts by mass of an anticaking agent were mixed, and then 31 parts by mass of thiophanate-methyl and 9 parts by mass of tebuconazole were added thereto, followed by conducting wet-milling using a glass bead. The 50% diameter of particles contained in the wet-milled product was 1.38 µm.

A solution composed of 8 parts by mass of glycerol, 0.1 parts by mass of xanthan gum (manufactured by Rhodia, Rhodopol 23 (trade name)), and 0.1 parts by mass of a preservative agent were added to the wet-milled product. Then, a solution composed of 14 parts by mass of solvent (A), 2.0 parts by mass of surfactant (C), 0.8 parts by mass of cyflufenamid were added thereto, followed by stirring the mixture using a homogenizer to obtain a suspoemulsion. The 50% diameter of particles contained in the suspoemulsion was 1.3 µm.

The obtained suspoemulsion maintained favorable dispersibility and cyflufenamid was not precipitated, even when the suspoemulsion was kept still at room temperature. In addition, the obtained suspoemulsion maintained favorable flowability even when stored at 54°Cfor 1 week.

### (Comparative Example 1)

A suspoemulsion was obtained in the same way as that of Example 1 except that solvent (B) was used instead of solvent (A). Although cyflufenamid was not precipitated, the viscosity of the obtained suspoemulsion increased rapidly and the flowability was lost, when the obtained suspoemulsion was left still at room temperature.

### (Comparative Example 2)

A suspoemulsion was obtained in the same way as that of Example 1, except that solvent (C) was used instead of solvent (A). The 50% diameter of particles contained in the suspoemulsion was 53.6 µm.

Although cyflufenamid was not precipitated, the viscosity of the obtained suspoemulsion gradually increased, and the flowability was deacreased, when the obtained suspoemulsion was left still at room temperature. The obtained suspoemulsion was solidified when stored at 54°Cfor 1 week.

### INDUSTRIAL APPLICABILITY

In the suspoemulsion according to the present invention, thiophanate-methyl, tebuconazole and cyflufenamid are appropriately dispersed, and the flowability and the storage stability thereof are excellent.

## Claims

1. A suspoemulsion comprising a thiophanate-methyl, a tebuconazole, a cyflufenamid, a fatty acid ester-based solvent and water.

2. The suspoemulsion according to claim 1, wherein a carbon number of a fatty acid of the fatty acid ester-based solvent is 8 to 24.

3. The suspoemulsion according to claim 1 or 2, wherein the fatty acid of the fatty acid ester-based solvent is at least one selected from the group consisting of a caprylic acid, a capric acid, a lauric acid, a myristic acid, a palmitic acid, a palmitoleic acid, a stearic acid, an oleic acid, a linoleic acid, a linolenic acid and a arachidic acid.

4. The suspoemulsion according to any one of claims 1 to 3, further comprising a surfactant.

5. The suspoemulsion according to claim 4, comprising, as the surfactant, a polyoxyethylene alkylether, a polyoxyalkylene block copolymer, and an aromatic sulfonate formalin condensate or a salt thereof.
